# EUROPEAN PATENT SPECIFICATION

(11) **EP 4 028 488 B1**
(45) Date of publication and mention of the grant of the patent: **27.08.2025**
(21) Application number: 20781440.1
(22) Date of filing: 11.09.2020
(51) Int. Cl.: C10B 53/07, C10J 3/00, F25J 3/04, F23G 5/033, F23G 7/12

(54) **PROCESS TO CONVERT A WASTE POLYMER PRODUCT TO A GASEOUS PRODUCT**
VERFAHREN ZUR UMWANDLUNG EINES ABFALLPOLYMERPRODUKTS IN EIN GASFÖRMIGES PRODUKT
PROCÉDÉ POUR TRANSFORMER UN DÉCHET POLYMÈRE EN UN PRODUIT GAZEUX

(30) Priority: 11.09.2019 NL 2023807; 29.10.2019 NL 2024115; 09.01.2020 NL 2024638; 09.03.2020 NL 2025082
(43) Date of publication of application: 20.07.2022
(73) Proprietor: Torrgas Technology B.V., 1101 EE Amsterdam (NL)
(72) Inventor: Cramwinckel, Michiel, 2271 BK Voorburg (NL)
(74) Representative: Cramwinckel, Michiel
(86) International application number: PCT/EP2020/075469
(87) International publication number: WO 2021/048351

(56) References cited:
- CN-A- 102 359 729
- US-A- 5 904 879
- US-A1- 2006 053 791
- US-A1- 2008 247 904
- US-A1- 2012 073 292

## Description

The invention is directed to a process to convert a waste polymer product to a gaseous product.

The recycling of waste polymer products, also referred to as waste plastics, is a specific sector of waste recycling and consists of a set of operations performed on waste composed of plastic materials in order to obtain new material to be reintroduced in production processes. After the sorted waste collection step, the plastic is taken to first selection and treatment plants; it is then separated from other fractions and impurities and then divided by polymer type. In particular, low- and high-density PET and PE are selected. Various methods for mechanical recycling are known which are adapted to obtain flakes or granules which are then used to produce new objects.

US2007187299 describes a process wherein waste polymers are isolated from other waste by a selection based on the dielectric constant of the material. This separation separates polymer materials having a dielectric constant below a certain threshold, such as polypropylene and polyethylene, polystyrene and ABS from materials having a higher dielectric such as wet or moist wood, foam and rubber.

US2004226864 describes a process to separate polymer films from garbage by flotation. The publication states that this avoids plastic film products such as plastic bags to end up in a landfill. The publication is however silent how the plastic film is to be further used.

US4406411 describes a process where chrome plated ABS polymer is milled at cryogenic temperatures to a powder. The metal is separated from the powder by means of a magnetic separation and the cleaned ABS powder is melted and extruded thereby obtaining an ABS extrudate.

US4483488 describes a process where PVC is recovered from PVC coated fabric by cryogenic milling.

Because plastics cannot be recycled indefinitely and only 50% of the total of plastic waste can be reused validly in a production process the remaining 50% is not suitable for various reasons. These reasons may be for example the excessive degree of contamination of plastics, the loss of technical properties due to past recycling/reuse cycles, the impossibility to perform a selection of the various types of plastic for finer fractions. This remaining 50% of plastic waste is currently disposed by waste-to- energy conversion or by landfill disposal.

Waste-to-energy conversion uses waste treatment plants (waste-to- energy plants) which allow to recover the heat generated during the combustion of said waste and use it to generate steam, which is then used to generate electric power or as a heat transfer medium, for example for remote heating. Although modern waste-to-energy conversion plants have many advantages with respect to simple incinerators, waste-to-energy conversion processes remain characterized by negative economic and environmental impacts; in general, they are unable to reach an economic balance only through the generation and sale of thermal and/or electric power. From the environmental standpoint, waste-to-energy conversion processes are characterized by all the negative impacts linked to waste combustion processes, such as, by way of nonlimiting example, carbon dioxide emissions in the atmosphere, production of dangerous and non-dangerous waste and production of wastewater.

So-called "Plastic-To-Fuel" (PTF) technologies are known which consist of processes aimed at converting waste and plastic materials into liquid fuels or synthetic oils, mainly based on the two processes of simple pyrolysis and catalytic pyrolysis. WO2019003253 describes a PFT process which cracks a mixture of molten plastics in the presence of a liquid catalyst at a temperature between 350 and 500 °C to non-condensable gasses, such as methane and carbon monoxide and liquid hydrocarbon fuel fractions. A disadvantage of this process is that it makes use of a catalyst. The catalyst will have to be recovered from the liquid products making the process complex. A general disadvantage of PTF processes is that the quality of the fuel is such that they are not directly useable as transportation fuels like gasoline or diesel.

WO2018/224482 describes a process to recycle polystyrene containing plastic waste mixture by pyrolysis to obtain styrene. A disadvantage is that although styrene yields are high also significant amounts of by-products are formed. The document CN 102 359 729 A further discloses a process of converting waste polymer according to the state of the art.

The aim of the present invention is to provide a simple process that is capable of processing waste polymer products to gaseous products and not having the disadvantages of the prior art processes. This object is achieved by the following process.

Process to convert a waste polymer product to a gaseous product comprising the following steps:
(a) cryogenic milling of the waste polymer product to obtain polymer particles, wherein the waste polymer product is a mixture of different waste polymer products comprising at least two polymers of the following list of polymers consisting of LDPE (Low-density polyethylene), HDPE (High-density polyethylene); PP (Polypropylene); PS (Polystyrene); PVC (Polyvinyl chloride); PET (Polyethylene terephthalate); PUT (Polyurethanes) and PP&A fibres (Polyphthalamide fibres),
(b) partial combustion of the polymer particles by contacting the polymer particles with oxygen to obtain a syngas comprising of carbon monoxide and hydrogen by performing step (b) in a rotary kiln reactor or a tubular reactor having axial mixing means and wherein the polymer particles are comprised in an active solid biomass matrix as a pellet or briquette obtained by mixing and compressing between 98 and 40 wt% of the active solid biomass matrix and between 2 and 60 wt% of the polymer particles, wherein the active solid biomass matrix comprises a carbonaceous compound and ash forming compounds and wherein the temperature in step (b) is between 500 and 800 °C and below the melting temperature of the ash forming compounds such to obtain char particles and a gaseous mixture of a syngas and gaseous hydrocarbons and wherein the char particles are separated from the gaseous mixture and wherein the gaseous mixture is subjected to a second partial combustion at a temperature of between 1000 and 1800 °C and above the ash melting temperature of the ash forming compounds to obtain a mixture enriched in syngas.

Applicants found that by cryogenic milling polymer particles may be obtained by simple means. It is found that the cryogenic milling may be effectively performed on polymer products of different sizes and/or composition. By decreasing the temperature the polymer becomes brittle and is easily milled to smaller particles. A further advantage is that the process can use polymer products which are contaminated. A further advantage is that a more stable feedstock for the partial combustion may be obtained in terms of its composition when starting from an in time varying mixture of different polymer waste. The polymer particles obtained in step (a) can be easily homogenised thereby averaging its composition. This allows the use of waste plastic feedstock having widely varying composition in combination with a stable partial combustion process. The process can further use polymers which are not suited for recycle to its virgin state because of loss of technical properties due to past recycling/reuse cycles. The process can also convert mixtures of polymers which cannot be separated into discrete fractions. Further the process can convert polymer films which are otherwise difficult to recycle.

Because the polymer particles may be milled to very small sizes it is possible to perform the partial combustion such that almost only gaseous products like carbon dioxide, carbon monoxide, hydrogen and water are formed while no significant quantities of tars or liquid fuels are formed such as the fuels obtained in the PFT process. This avoids having to upgrade such a fuel to a fuel suited for transportation purposes. Any contaminants formed will end up in the formed gasses or may be easily separated by for example a washing out process step.. Well known gas treating processes may be applied to purify the formed gasses for use in downstream processes.

As stated above, one of the advantages of the present process is that waste plastic feedstock originating from different sources may be cryogenically milled without having to perform substantial pre-treatment of the waste plastic feedstock, such as separation into different fractions per polymer type. This allows one to cryogenically mill different waste plastic feedstocks having varying compositions in time. This results in powders of waste plastic feedstocks having different compositions. Preferably these powders are homogenised to obtain a powder of the waste plastic feedstock having a substantially constant performance in the catalytic cracking process.

Homogenisation may be simply performed in the storage vessels for the powder by mixing the content of the vessel. For example the powder obtained in at least a 2 hour period may be homogenised, preferably the powder obtained in at least a 12 hour period may be homogenised, more preferably the powder obtained in at least a 24 hour period may be homogenised, even more preferably the powder obtained in at least a 60 hour period may be homogenised. The homogenisation results in a homogenised product. The preferred time period may also depend on the variation in time of the composition of the waste plastic products to be milled and the available mixing vessels. Homogenisation may also be performed by mixing powders obtained from different cryogenic milling processes using different waste plastic products as starting material.

The homogenisation is preferably performed to achieve a powder having an atomic carbon content, an atomic hydrogen content and optionally an atomic oxygen content and atomic nitrogen content which contents vary in time for less than 20%, more preferably less than 10% and even more preferably less than 5% from an average content.

By partial combustion, also referred to as partial oxidation or gasification in this specification, of the polymer particles a mixture of carbon monoxide and hydrogen (syngas) is obtained as the main product. Thus very small amounts of by-product are obtained. This may be explained by the fact that the polymer particles will comprise mainly of carbon and hydrogen and optionally oxygen and/or nitrogen. Any halogens, like chlorine, as present in the feed will be converted to gaseous halogen compounds which can be easily separated by washing from the syngas. Any other elements which may be present as polymer additives will be converted to gaseous products which can also be separated from the syngas. Syngas itself is a favourable product because it can be used as fuel to generate power or be converted to valuable products, like hydrogen, SNG, methanol, ethylene, transportation fuels, like high cetane diesel and kerosene, high VI-base oils and waxes.

The waste polymer product may be composed of thermoplastic materials and/or thermosetting materials. Preferably the polymers are polymers such as for example LDPE (Low-density polyethylene), HDPE (High-density polyethylene); PP (Polypropylene); PS (Polystyrene); PVC (Polyvinyl chloride); PET (Polyethylene terephthalate); PUT (Polyurethanes) and PP&A fibres (Polyphthalamide fibres). The waste polymer may be any one of the above polymers, suitably the waste polymer is a mixture comprising of at least two of the above polymers, preferably comprising of at least three of the above polymers and more preferably comprising of at least four of the above polymers. The present invention provides a method to make use of polystyrene which is difficult to recycle to its virgin state. Examples of mixtures are mixtures comprising LDPE (Low-density polyethylene) and HDPE (High-density polyethylene) and mixtures comprising LDPE (Low-density polyethylene), HDPE (High-density polyethylene) and PP (Polypropylene). Preferably polystyrene is part of the mixture.

The waste polymer may also comprise any one or more of other polymers such as PMMA (polymethyl methacrylate), PVC (polyvinyl chloride), PUR (polyurethanes), ABS (acrylonitrile-butadiene-styrene), rubbers, polyamide (Nylon).

The waste polymers may originate from households, industry, restaurants, hospitals, retail, fishing, from contaminated seas, oceans and rivers. The waste polymer product may be contaminated by metals and biomass or biomass derived products such as paper, carton or fabrics like cotton and wool. These contaminants are preferably separated from the waste polymer product. This may be performed by first reducing the waste polymer product and its contaminants in size to obtain a mixture of smaller particles and subsequently water washing the obtained mixture. Metals may be separated by sedimentation and paper and the like by flotation. Preferably the content of these contaminants is less than 30 wt%, more preferably less than 20 wt% and more preferably less than 5 wt%.

Optionally the metal contaminants may be separated after performing step (a). Metals, like chromium, aluminium and iron may be separated by flotation or magnetic separators from the polymer particles prior to step (b).

Exemplary waste polymer products which can be processed by this process are used fishing nets, plastic bags, food packaging, plastic bottle, like PET bottles, plastic films and sheets, carpets such as Nylon-based carpets, product packaging material like polystyrene, fabrics, like Nylon, polyester, PET fabrics, shoes, tires. The cryogenic milling is especially suited to reduce films of the above polymer products to polymer particles. It has been a challenge to recycle polymer films and the present process provides a solution for this problem.

The waste polymer product as used in the cryogenic milling of step (a) preferably has dimensions and shape which are suited for the specific cryogenic milling technology used in step (a). Larger waste polymer products may therefore be pre-treated to reduce their size. Such pre-treatment may be by cutting, tearing and/or crushing.

Preferably any inorganic contaminants, like sand or soil, is removed from the waste polymer products prior to performing step (a). Such a removal step may be performed by water washing of the waste polymer product. If such removal is difficult, like when processing used carpets, it may also be possible to remove these inorganic contaminants after performing step (a). For example by making use of the difference in mass density of the polymer material and the inorganic contaminants. Such separation may be performed by for example cyclone separation.

The waste polymer products do not necessarily be dry. Some water, for example sea water, may be present. In the cryogenic milling the water will solidify and subsequently by sublimation be removed from the solid polymer particles. Sublimation will be favoured by using dry gasses. Any salts originating from seawater may remain on the polymer particles. These salts may for example be removed from the partial combustion gasses obtained in step (b) by water washing.

Step (a) may be performed by using cryogenic milling technology as for example described in US4406411, US4483488, US3885744 and US5203511. The milling itself may be performed in a grinding mill in the presence of a coolant. The coolant is preferably a liquid gas, more preferably an inert liquid gas. The liquid gas may be a liquid permanent gas such as helium, hydrogen, neon, nitrogen, oxygen, and normal air. Preferably liquid air and more preferably liquid nitrogen is used as a coolant. The temperature at which the milling takes place is suitably at the boiling temperature of the liquid gas and slightly above said temperature. The temperature in step (a) is preferably well below the glass transition temperature of the waste polymers and suitably below minus 50 °C (-50 °C), preferably below minus 100 °C (-100 °C) and even more preferably 150 °C (- 150 °C) and sometimes even below minus 180 (-180 °C).

The cryogenic milling may be performed using liquid nitrogen using the cooling and grinding technology called PolarFit^{®} Cryogenic Reduction Solutions as offered by Air Products. In such a process the liquid nitrogen may be added directly to the mill chamber of the grinding mill. The liquid gas may also be provided to a conveyor, like a screw conveyor, where the waste polymer product is cooled to its desired low temperature before it enters the mill chamber as for example described in US3771729. For larger shaped waste polymer products it may be desirable to contact the waste products in a so-called tunnel freezer as for example described in US4175396.

Liquid nitrogen is the preferred liquid gas to cool the waste polymer product because it may be easily made in large quantities and because it is inert. Liquid nitrogen is preferably prepared in an air separation process which also prepares the oxygen containing gas which may be used in step (b). In this manner the partial combustion will then primarily produce a syngas. This optimises the use of the air separation process and the products such as the liquid nitrogen and the oxygen containing gas obtained in such a process. The liquid nitrogen will evaporate thereby effectively cooling the waste polymer product in step (a). Alternatively liquid air may be used which is formed in such an air separation unit and which may be separated as a separate product. The oxygen produced in such a process may then be obtained in a purity suited for performing step (b) and the nitrogen produced may be obtained in a purity required for optional downstream processes such as an ammonia synthesis process. If nitrogen is used in step (a) any evaporated and used nitrogen may subsequently be used as a carrier gas to transport the polymer particles to step (b) and more especially to a burner used in step (b). Another part of the gaseous nitrogen may be returned to the air separation process to be liquified and reused in step (a). The gaseous nitrogen, either obtained in step (a) or directly in the air separation process, may also be used as a reactant in downstream processes as will be described further below.

The air separation process is preferably based on the commonly used and most well known air separation process for oxygen and nitrogen production. This process is based on the Linde double column cycle invented In the first half of the 20^{th} century. The basic concept of the Linde double column cycle is to have thermal communication between the top of the higher pressure column and the bottom of the lower pressure column to condense the vapor nitrogen from the higher pressure column and reboil the liquid oxygen in the bottom of the lower pressure column. Various air separation processes have been designed based on this principle depending on the desired products. Preferably the air separation process produces liquid nitrogen for use in step (a) and gaseous and/or liquid oxygen for use in step (b). The oxygen may be prepared as liquid oxygen to simplify storage and/or may be obtained as gaseous oxygen for direct use in step (b).

In a preferred embodiment the air separation process is integrated with a liquified natural gas (LNG) regas plant. In this way one or more nitrogen rich gas streams of the air separation plant may be reduced in temperature and/or liquified by indirect heat exchange with the evaporating liquid natural gas of the regas plant as for example described in US5137558, US5139547, US5141543, US2008216512, US2008000266, US2009100863 and EP2669613. Preferably the pressure of the nitrogen rich gas streams is higher than the LNG pressure such that in case of leakage no natural gas will contaminate the nitrogen rich streams. The air separation plant preferably produces both liquid nitrogen and liquid oxygen. This is especially favourable for LNG regas plants which have the function to diversify supply of methane gas to the natural gas grid as an alternative for pipeline gas. Such a regas plant may not continuously prepare the required nitrogen and/or oxygen products while the downstream processes like the cryogenic milling or the partial combustion processes may require a constant flow of these products. By storing a buffer volume of liquid nitrogen and optionally liquid oxygen the desired constant flow may be achieved while the LNG regas plant may temporarily produce at a low production rate.

Step (a) may be performed in the vicinity of where step (b) is performed. This is advantageous because then it is possible to also have an air separation process at the same location to provide for the liquid nitrogen for step (a) and oxygen for step (b). Step (a) may also be performed closer to the source of the waste polymer product. For example a municipal waste plant may be equipped with a cryogenic milling facility to perform step (a). The preferred liquid nitrogen to perform step (a) may be supplied to this municipal waste plant by means of a pipeline or by road or train from an air separation plant. Alternatively a mobile cryogenic milling unit, for example on a truck, may be used. Such a mobile unit may be preferred when temporarily more polymer waste is produced at one location. The polymer particles, optionally pelletised, may then be transported to a facility where step (b) is performed. This may be at the same facility as the air separation process. This facility to perform step (b) may source its polymer particles from more than one cryogenic milling processes as described above.

When the mixture of polymer particles obtained in step (a) comprises low density polymers such as polyethylene and polypropylene and high density polymers such as PVC it may be advantageous to separate the polymers particles in a step (a1) into at least a light fraction having an average particle density of below 1100 kg/m³ and a heavy fraction having an average particle density of above 1100 kg/m³. The light fraction and/or the heavy fraction will then be subjected to the partial combustion step (b). The advantage of performing such a separation is that a light fraction is obtained comprising relatively less difficult components such as PVC and a heavy fraction is obtained enriched in such more difficult components. This allows on the one hand to perform step (b) in a relatively simple gasification process when the light fraction is used as feed and to perform step (b) in a dedicated gasification process adapted to deal with the difficult components such as PVC.

The light fraction may suitably be catalytically cracked to lower olefins and heavier hydrocarbons by contacting the light fraction with a fluidized catalytic cracking catalyst at a temperature of between 550 and 750 °C wherein also coke is formed. Lower olefins are ethylene, propylene and/or butylene compounds. Because the light fraction will suitably comprise of poly-olefins like polyethylene and polypropylene a high yield to ethylene and propylene may be expected. Thus a favourable chemical recycle is obtained for these low density polymers.

The catalytic cracking of polymers is as such well known and described in US2014/0228204 and for example in Elordi G., et al, Catalytic pyrolysis of HDPE in continuous mode over zeolite catalysts in a conical spouted bed reactor, J. Anal. Appl. Pyrolysis 85 (2009) 345-351. The catalytic cracking is suitably performed by contacting the powder of the waste plastic feedstock with a suitable cracking catalyst at a temperature of between 550 and 750 °C. The contacting may be performed in a typical FCC riser. In order to enable the use of existing feeding systems it may be preferred to mix the light fraction with a hydrocarbon, such as light or heavy FCC cycle streams and feeding the obtained slurry to the FCC riser. The slurry may also be the slurries which will be described below in more detail and especially slurries comprising the polymer particles and VGO or HVGO. Preferably the cracking catalyst is a fluidized catalytic cracking (FCC) catalyst. The FCC catalyst is comprised of at least one of a X-type zeolite, a Y-type zeolite, a USY-zeolite, mordenite, Faujasite, nano-crystalline zeolites, MCM mesoporous materials, SBA-15, a silica-alumino phosphate, a gallophosphate, medium pore size zeolite and a titanophosphate. Preferably the FCC catalyst is comprised of at least one of a Y-type zeolite and a USY-zeolite. Preferably ZSM-5 is added to the process to enhance the yield to olefins.

Before performing a separation step (a1) it is preferred to remove any fines, ie the fraction composed of the smallest particles, from the polymer particles as obtained in step (a). Preferably the fraction of fines which are separated is at most 30 wt% of the polymer particles and more preferably at most 20 wt% of the polymer particles. Such a separation may be by means of a sieve or by means of a cyclone wherein the fines are carried over by a transport gas, suitably nitrogen. The fines may be separated from the carrier gas in a next cyclone or a filter, like for example a candle filter. The fines, which may be composed of polymers having a density of above and below 1100 kg/m³, are suitably added to the heavy fraction. Such a separation of fines minimises contamination of fines having a higher density than 1100 kg/m³ in the light fraction when performing step (a1) as described below.

Step (a1) may be performed by separation processes which make use of the difference in particle density. This may be by means of flotation in a liquid medium. Preferably methods are used which avoid the use of a liquid medium. On such method is by flowing gas through a zig-zag channel upwards and the powder of the waste plastic feedstock downwards. The light fraction will be entrained by the gas flow and be collected at the top and the heavy fraction is collected at the bottom of the zig-zag fraction. More preferably the separation is performed in a fluidized bed wherein the heavy fraction is obtained at a lower end of the fluidized bed and the light fraction is obtained at a higher end of the fluidized bed. The fluidized bed is preferably operated in a continuous mode wherein at an intermediate position the powder of the waste plastic feedstock is continuously supplied and wherein at the lower end of the fluidized bed the heavy fraction is continuously discharged from the fluidized bed and wherein from the higher end of the fluidized bed the light fraction is continuously discharged from the fluidized bed. At the lower end a fluidization medium is supplied. Examples of suitable fluidization media are inert gasses, such as steam, carbon dioxide and nitrogen. The nitrogen is preferably nitrogen as obtained in the earlier referred to air separation process. The rate of this fluidization medium is at least sufficient to achieve minimum fluidization and at most prior to the start of bubbling of the fluidized bed. The fluidization medium is suitably discharged from the upper end of the fluidized bed separate from the light fraction. The fluidization medium as discharged may contain fines which can be separated from this medium by means of sieves, filters, like for example a candle filter, and/or cyclones. Such a process is for example described in US5397066.

The fluidized bed is suitably an vertical elongated column providing a high fluidized bed height to column diameter ratio, preferably above 4: 1 and more preferably above 6:1. This to minimize back mixing in the vertical direction in the column. The fluidized bed may be provided with means to charge parts of the column to attract electrostatically charged polymer particles to further enhance the separation. The application of such electrostatically charged parts of the column will depend on the type of polymers present in the powder of the waste plastic feedstock.

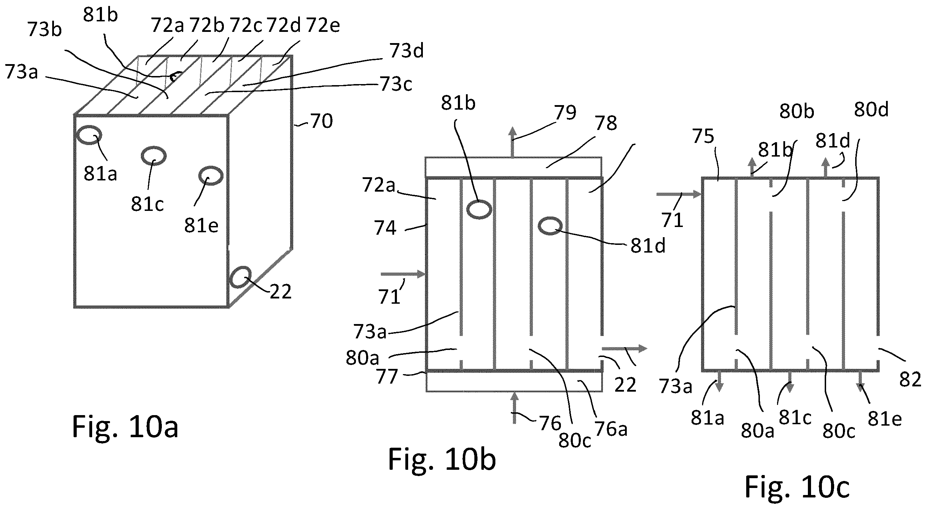

More than one of the elongated columns may be operated in series wherein the powder obtained at the lower end of an upstream column is fed to a downstream column and wherein the powder obtained at the lower end of the most downstream column is the heavy fraction and wherein the powder obtained at the upper ends of the columns is combined as the light fraction. Instead of separate columns the separation may also be performed in a single apparatus comprising compartments in which the above separations are performed. Figure 10 of this application illustrates such a preferred single apparatus.

The polymers having a density of below 1100 kg/m³ preferably comprises at least one of the following list of polymers consisting of LDPE (Low-density polyethylene), HDPE (High-density polyethylene); PP (Polypropylene) and PS (Polystyrene).

The polymers having a density of above 1100 kg/m³ preferably comprises at least one of the following list of polymers consisting of PVC (Polyvinyl chloride); PET (Polyethylene terephthalate); PUT (Polyurethanes) and PP&A fibres (Polyphthalamide fibres), polyvinylidene chloride, PU (polyurethane), ABS (acrylonitrile-butadiene-styrene), nylon, aramid and fluorinated polymers.

In a step (a1) any silicon dioxide, for example sand and dirt, which may be present in the polymer particles as obtained in step (a) may also be separated before performing step (b). Such a separation may also be performed by the above separation methods described for step (a1).

Between performing step (a1) and step (b) any iron, nickel and/or cobalt and/or their alloys as present in the polymer particles as obtained in step (a) may be separated from the polymer particles as obtained in step (a) and/or from the heavy and/or light fractions obtained in an optional step (a1) by means of magnetic separators.

The polymer particles are partially combusted. In such a process a sub-stoichiometric amount of oxygen is used, optionally in the presence of steam, resulting in that hydrogen and carbon monoxide are produced as the main compounds. Such a process is also referred to as gasification. The gasification is performed by a technology which partly oxidises the waste polymer particles to carbon monoxide and hydrogen. The oxygen is preferably a gaseous stream such as air. Preferably the content of oxygen is higher than that of air, having an oxygen content of more than 90 vol.%, preferably more than 95 vol.% and even more preferably more than 99 vol.%. The oxygen containing gas which is enriched in oxygen is suitably obtained in the above described air separation process.

The gasification pressure may be around atmospheric and more preferably between 2 and 10 MPa.

Because polymer particles are used in small sizes it is possible to perform the partial combustion such that almost only gaseous products like carbon dioxide, carbon monoxide, hydrogen and water are formed while no significant quantities of tars or liquid fuels are formed. The polymer particles are present in a solid matrix. This solid matrix helps to avoid that plastic particles agglomerate and form tars or liquids when the temperature is increased to the gasification temperatures described above. The solid matrix further enables storage and transport of the plastic particles to a gasification process.

The plastic particles are present in a solid matrix as compressed pellets or briquettes.

The solid matrix is a reactive biomass matrix. The solid matrix, as a powder and/or as fibres, are suitably mixed with the plastic particles and compressed to a pellet or briquette. The compressed pellet or briquette suitably comprises of between 2 and 60 wt% of polymer particles and between 98 and 40 wt% of a solid matrix.

A rotary kiln reactor or a tubular reactor having axial mixing means is used when processing the polymer particles in a solid matrix. Because the solid matrix - polymer particle comprising composition also comprises ash forming components the gasification reaction is performed in the rotary kiln reactor or a tubular reactor having axial mixing means at a temperature just below the melting temperature of the ash at a temperature of between 500 and 800 °C and at a solid residence time of between 1 and 60 minutes, preferably between 10 and 60 minutes. When such a process is performed starting with compressed pellets or briquettes of a carbonaceous matrix and the polymer particles syngas may be produced in admixture with gaseous hydrocarbons and a solid char particle. The solid char particle is a product as such also known as activated coal and may find use in applications known for activated coal. After separating the char particles from the gaseous mixture the gaseous mixture of syngas and gaseous hydrocarbons is subjected to a second higher temperature gasification process wherein the gaseous hydrocarbons are also converted to syngas. The gaseous mixture is thus enriched in syngas in such a second step. The syngas enriched mixture is found to be applicable for chemical synthesis. The temperature conditions for this second higher temperature gasification process are higher than the melting temperature of the ash compounds and between 1000 and 1800 °C. This is possible because the ash forming compounds will be comprised in the char particles. This embodiment is advantageous because it on the one hand converts the easier convertible carbon based components of the matrix and the polymer particles to a syngas having a high hydrogen to carbon monoxide ratio and the less easy convertible carbon components to a solid carbonaceous product having a reduced content of hydrogen. In alternative processes starting from the same feedstock composition one would have produced a significant amount of carbon dioxide, for example in a water gas shift reaction, to obtain a syngas having the same hydrogen to carbon monoxide ratio.

Part of the polymer particles obtained in step (a) may be used to make polymer products. The polymer particles may be easily mixed to obtain a substantially homogenous mixture of a polymer powder. Even if the composition of the waste polymer fluctuates in time between a given range it may be possible by mixing to obtain a mixture having a certain average composition. This powdery waste polymer product may be used to make new polymer products by for example injection moulding or extrusion. The powdery polymer particles may be pelletised to enhance transportation and storage.

The content of hydrogen in the mixture of carbon monoxide and hydrogen may be increased by performing one or more water shift reaction steps thereby converting carbon monoxide to carbon dioxide. The gas thus obtained will be referred to as the shifted gas. Preferably carbon monoxide is converted to hydrogen and carbon dioxide by means of a catalysed water gas shift reaction. The catalysed water gas shift reaction is well known and for example described in " Gasification" by C. Higman and M. van der Burgt, 2003, Elsevier Science, Chapter 5, pages 315-318. There exists sweet and sour water gas shift technologies. Preferably the sweet shift technology is used when the content of sulphur is low in the gas to be shifted. This may be situation when starting from most plastic waste products. If any sulphur is present in the gas it is preferably removed. Sulphur removal is well known technology and is for example described in " Gasification" by C. Higman and M. van der Burgt, 2003, Elsevier Science, Chapter 5, pages 298-309.

Preferably the hydrogen and carbon dioxide in the gas mixture obtained when performing a water gas shift reaction are separated. Hydrogen is preferably separated from carbon monoxide by means of a membrane separation, wherein hydrogen is obtained as the permeate gas. Preferred membranes are so-called H₂-selective membranes. Preferably, the H₂-selective membranes have a permselectivity of H₂ over CO₂ of at least 50, preferably 100, targetting above 1000. Reference herein to permselectivity of a membrane is to the ratio of the permeability of H₂ to the permeability of CO₂. Examples of such membranes are microporous silica membranes, membranes comprising palladium or palladium alloys, polymeric membranes, carbon molecular sieve membranes. The membrane may be a polymeric membrane. Preferred polymeric membranes are cross-linked or thermally rearranged polymeric membranes. Suitably the membrane is a polyimide or polyaramide based membrane. Commercially available polyimide membranes include Matrimid(R) obtainable by Ciba Specialty Chemicals Ltd., Switzerland, and P84 obtainable by Degussa AG, Germany. Membranes made from blends of polyimides are also suitable for the gas phase removal of hydrogen from a hydrogen and carbon monoxide containing gas mixture and show a particularly useful selectivity between hydrogen and carbon monoxide. Such membranes are for example described in WO2008046880.

When very pure hydrogen is required it may be advantageous to use a membrane, which permits diffusion of essentially pure hydrogen gas, the diffused gas having less than 1 part per million impurities. Such H₂-selective membranes are preferably based on hydrogen-permeable and hydrogen-selective metals. Hydrogen-permeable hydrogen-selective metals and alloys useful for preparing the membrane include Pt, Ni, Au, Pd, Pd-V, Pd-Ta, Pd-Nb, Pd-Ag, Pd-Cu and Pd-Au. Palladium and its alloys are particularly useful in forming the hydrogen-permeable hydrogen-selective membranes. The hydrogen-permeable hydrogen-selective membrane should be capable of operating at a temperature of at least 150 °C up to 500 °C. Hydrogen-permeable hydrogen-selective membranes utilizing palladium or a palladium/silver alloy as a hydrogen-permeable hydrogen-selective membrane layer are for example described in US20040244590, WO99/30806 and US20080282882.

The H₂-selective membranes may have any known configuration suitable for application in the present invention. Examples of suitable membrane configurations are, depending on the membrane material, flat sheet, spiral wound, tubular, hollow fibre or monolithic (multichannel) configurations. The membranes may be positioned in a single membrane unit (stage) or in several units, wherein each unit may be comprised of one or more separate membranes. A possible configuration employing hydrogen selective membranes is described in WO2008118560.

Hydrogen is selectively transported from the shifted gas on the retentate side of the membrane, through the membrane, to the permeate side of the membrane. Hydrogen concentration in the shifted gas will depend on the hydrogen content relative to the carbon content in the waste polymer product. The permeate side of the membrane is in fluid communication with an outlet for the H₂-rich permeate. The H₂-rich permeate is discharged from the permeate side of the membrane. Preferably, the temperature at which the membrane is operated is in the range of from 40 to 190 °C, more preferably for a polymeric membrane between 70 °C and 110 °C For the hydrogen-permeable hydrogen-selective membranes utilizing palladium or a palladium/silver alloy as a hydrogen-permeable hydrogen-selective membrane layer the temperature at which the membrane is operated can be higher, suitably above 350 °C and preferably below 500 °C To provide a suitable temperature at which a membrane of a certain type is operated the feed gas entering the membrane can be preheated by any suitable means. The membrane separation may be carried out at any suitable pressure difference over the membrane, e.g. between 0.1 and 20 MPa. Preferably the pressure difference is between 3 and 50 bar, more preferably between 0.5 and 3 MPa, wherein the pressure of the shifted gas as supplied to the membrane is higher than the pressure at the permeate side. The pressure at the permeate side of the membrane is suitably the pressure of the shifted gas. The pressure of the shifted gas is suitably between 1 and 25 MPa. Preferably the pressure of the shifted gas is between 2 and 10 MPa. An advantage of using a shifted gas with a higher pressure is that the CO₂ comprising gas will then be obtained at a corresponding high pressure. This makes this gas directly applicable for downstream processing, such as transportation and/or storage, without the necessity to recompress the CO₂ comprising gas. The CO₂ as isolated may also be used to make urea as described below.

The syngas as obtained in the above referred to gasification process or a hydrogen enriched syngas may be used as feedstock in various processes to make chemicals and fuels, such as the Fischer-Tropsch process, methanation process, methanol process, acetic acid process and the DME process. For example gas oil fuels and kerosene fuels may be prepared in a Fischer-Tropsch process as for example demonstrated in the Shell GTL Process in Qatar.

Part of the latent heat of the mixture of carbon monoxide and hydrogen obtained in the above gasification step (b) may be used to generate electricity. For example in a gas turbine.

The hydrogen which may be isolated as described above may find use as a heating fuel, a transportation fuel, as a fuel cell fuel to generate electricity. Hydrogen may also be used to generate electricity by means of combustion in a gas turbine. Hydrogen may also be used a chemical reactant in various synthesis processes to prepare well known base chemicals. One such a process is the process to prepare ammonia by reacting hydrogen with nitrogen. This may be an advantageous downstream use because nitrogen may be used as prepared in the earlier described air separation process described. For example nitrogen used in the cryogenic milling may be advantageously used as reactant in the process to prepare ammonia. The process to prepare ammonia is suitably the Haber-Bosch process to prepare ammonia by reacting nitrogen with hydrogen.

Ammonia is an interesting product because it can be easily stored, used as transportation fuel or as a fuel to generate electricity. The advantage of using ammonia as a combustible fuel is that it does not generate greenhouse gasses such as carbon dioxide. Ammonia may also be used as a chemical reactant in various synthesis processes to prepare well known base chemicals. One such use is a process to prepare urea. In such a process urea (NH₂CONH₂) is produced by reacting ammonia (NH₃) and carbon dioxide (CO₂) at elevated temperature and pressure according to the reactions:

2 NH₃ + CO₂ →-+NH₂COONH₄

NH₂COONH₄ → NH₂CONH₂ + H₂O

An overview of commercial processes using this chemistry is given e.g. in Ullmann Encyclopedia, 2005 Wiley-VCH verlag, Weinheim, Germany, chapter Urea. All processes use NH₃ and CO₂ as feedstock. Such a use of ammonia is advantageous because use may be made of the carbon dioxide as isolated from the shifted gas as described above. A further advantage is that the required heat in the urea synthesis may be provided by combustion of hydrogen as obtained in this process or by making use of the hot gasses obtained in the gasification process. In this manner no carbonaceous fuels are combusted to provide heat and thus significantly less to no greenhouse gasses are produced.

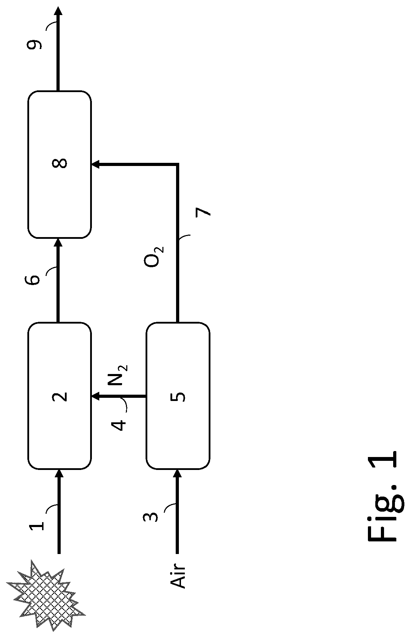

The invention shall be illustrated using the following Figures 1-10.

Figure 1 shows a stream of waste polymer product (1) being reduced in size in a cryogenic milling unit (2) to obtain polymer particles (6) by contacting the waste polymer product with liquid nitrogen (4). The polymer particles (6) are fully combusted not according to the invention in the presence of substantially pure oxygen in combustor (8) to obtain a combustion gas (9) of substantially only water and carbon dioxide. This mixture (9) can be easily separated into carbon dioxide stream and a water stream. The carbon dioxide can for example be used as a starting compound for other processes, in greenhouses or stored. The liquid nitrogen (4) and the substantially pure oxygen (7) are obtained in air separation unit (5) using air (3) as feed. The hot combustion gas (9) may for example be used for heating purposes, to make steam or to produce electricity. Electricity may be generated by first making steam and using the steam in a steam expander-generator to produce electricity. Combustor (8) may be an existing coal fired power plant. By adding a cryogenic milling unit (2) and an air separation unit (5) it is possible to adapt the existing coal fired power plant to an oxy-fired power plant while making use of the existing hardware of the coal fired power plant, such as the steam boilers and steam turbines.

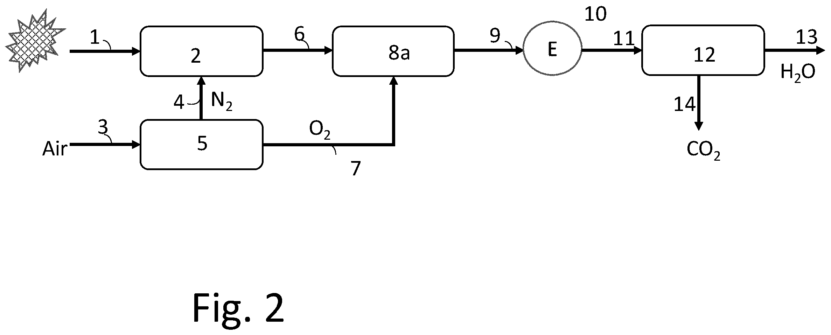

Figure 2 shows the scheme of Figure 1 except in that the polymer particles (6) are partly oxidised, also referred to as gasified, in gasification unit (8a) in the presence of substantially pure oxygen (7) to obtain a syngas mixture (9) of carbon monoxide and hydrogen. The syngas mixture (9) is used to produce energy in energy producing unit (10). This unit (10) may be a gas turbine unit wherein the syngas is combusted with air or with substantially pure oxygen, which may also be obtained in air separation unit (5). If combustion takes place with substantially pure oxygen a mixture (11) of carbon dioxide and water is obtained which can be separated into a steam of carbon dioxide (14) and water (13) in separator (12). Alternatively a water gas shift reactor may be positioned upstream the energy producing unit (10). In this water gas shift reactor carbon monoxide is converted to hydrogen and carbon dioxide. The carbon dioxide may be separated from the hydrogen and the hydrogen may be used to generated electricity, for example in a fuel cell or by combustion in a gas turbine. The carbon dioxide may be used as described in this specification. The gasification unit may have a design of a typical gasification unit known for gasifying feedstocks like natural gas or residual refinery feedstock. The burner will be adapted for the solid feedstock and burners known for gasification of coal powder may be used. The waste polymer may be a mixture of waste polymer products and is suitably clean. By clean here is meant that the content of ash forming compounds is low, suitably below 1 wt%.

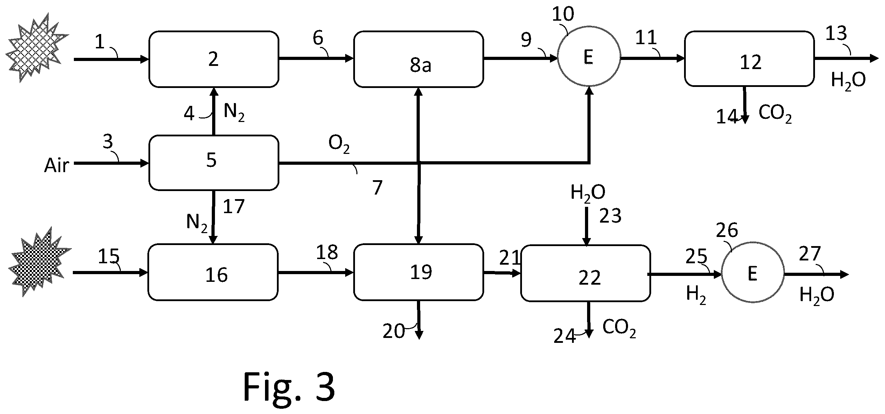

Figure 3 shows a power scheme as in Figure 2 except that in a separate cryogenic milling unit (16) a mixture of contaminated waste polymer products (15) are reduced in size. The contamination may for example be metal, paper, dirt and food products. In the cryogenic milling these contaminants will also be reduced in size to obtain a mixture (18) of polymer particles and contamination particles . If possible the contamination particles are separated from the polymer particles making use of their difference in density or by magnets in case of metal particles. There is however no requirement to remove all contaminants. In gasification unit (19) the mixture is gasified to obtain a syngas mixture (21). In unit (19) the syngas is passed through a water quench bath in which any ash formed during gasification and other contaminants such as halogens may be removed as a water stream (20). Gasification unit (19) makes use of the substantially pure oxygen (7) obtained in unit (5). The syngas (21) is subjected to a water gas shift reaction unit (22) to obtain a mixture of carbon dioxide and hydrogen by reaction with water (23). The carbon dioxide is separated as stream (24) and the purified hydrogen (25) is used in a gas turbine unit (26) where it is combusted with air to water (27). The electricity generated in units (10) and (26) may be combined. In this scheme it is also possible to omit the water gas shift (22) and have a unit (26) as unit (10) followed by a separation as in unit (12). In that case the purified oxygen (7) can be used in this unit (26). The hydrogen (25) may also be isolated as a product for use as a transportation fuel or as a heating fuel, for example in admixture with natural gas.

An alternative for the process scheme of Figure 3 is a scheme wherein all or part of the polymer particles (6) are stored as a fuel for later use, for use elsewhere and/or used as a starting compound to make new polymer products, for example by injection moulding or extrusion. When the waste polymer products are of a single source or have a stable composition over time it may be advantageous to reuse these polymers. The obtained powders may be pelletised.

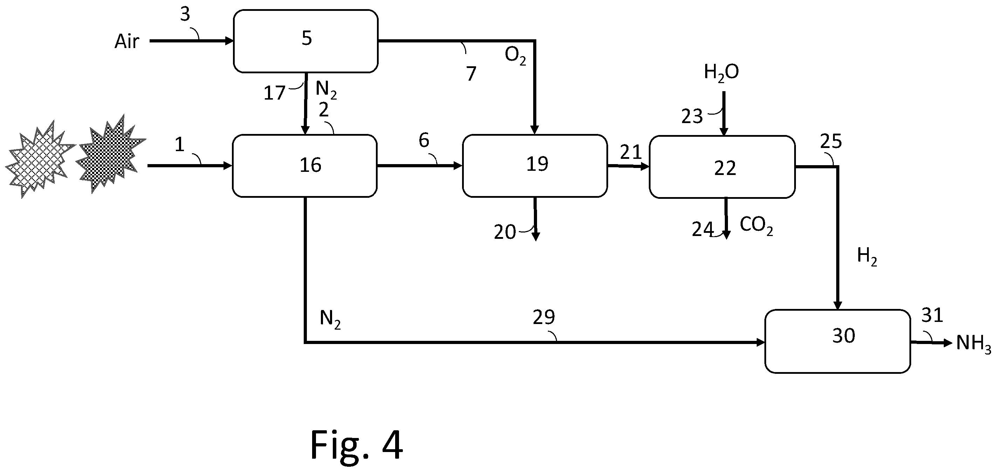

Figure 4 shows a scheme to produce ammonia from a mixture of contaminated waste polymer products. Instead of contaminated polymer products also clean waste polymer products can be used. The hydrogen (25) as produced is now used in a ammonia reactor (30) to react with nitrogen as prepared in the air separation unit (5). This scheme is advantageous because ammonia is made in a process which produced carbon dioxide as a concentrated stream, enabling for example further use or storage.

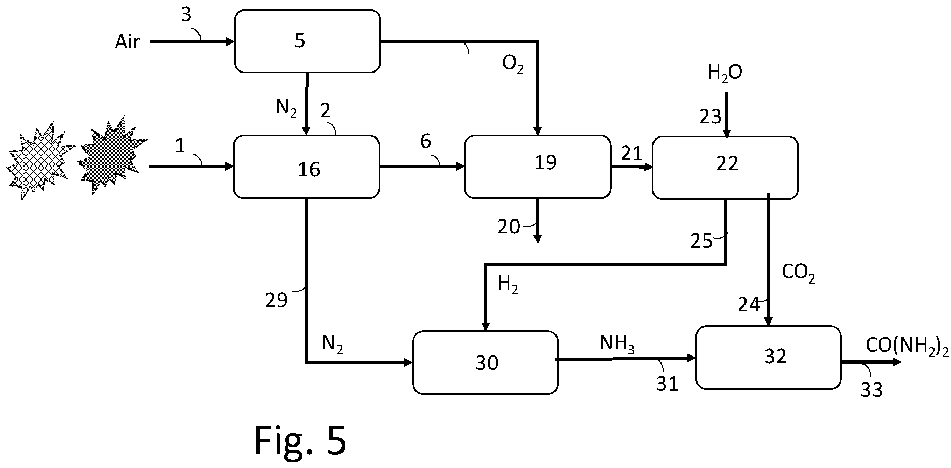

Figure 5 shows a scheme to produce ammonia, as in Figure 4, and urea from a mixture of contaminated waste polymer products. The ammonia (31) is provided to a urea process (32) to react with carbon dioxide (24) as obtained in water gas shift reaction unit (22) to prepare urea (33). This scheme shows how various chemicals, like nitrogen, hydrogen and carbon dioxide as isolated or prepared in upstream processes are advantageously used to prepare ammonia and urea.

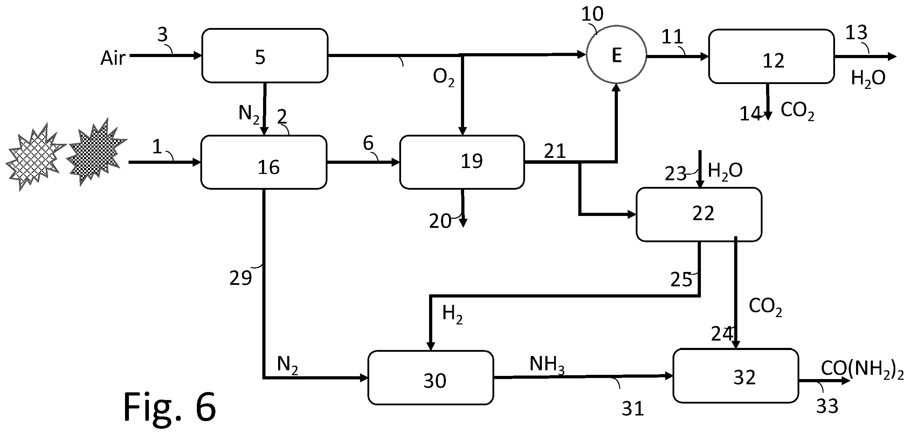

Figure 6 is a variant of the process scheme of Figure 5 wherein part of the syngas (21) is used to generate electricity in energy producing unit (10), for example by oxy-combustion in a steam boiler-steam turbine generating a flue gas (11). The electricity and steam may be used for the utilities in the various disclosed process steps, such as for pumps, compressors and heaters.

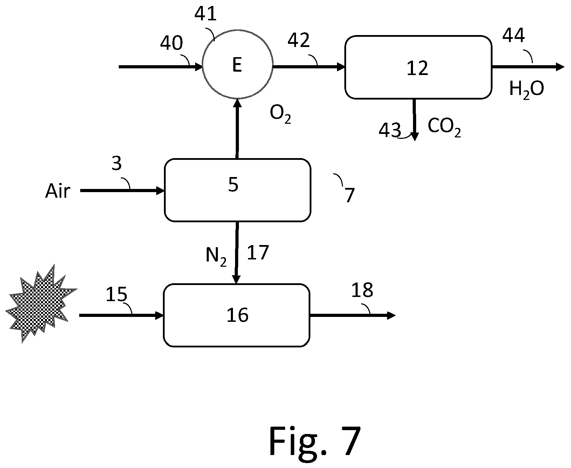

Figure 7 shows a process scheme wherein the polymer particles (18) may be used as described in for examples the schemes of Figures 1-6, stored as a fuel for later use or use elsewhere and/or used as a starting compound to make new polymer products, for example by injection moulding or extrusion. The oxygen (7) obtained in air separation unit (5) is used in an oxy-fired process to combust a carbonaceous feedstock like coal or residual oils and generate electricity and/or steam. The flue gas (42) will be highly concentrated in carbon dioxide which can be stored, optionally after removing the water (44).

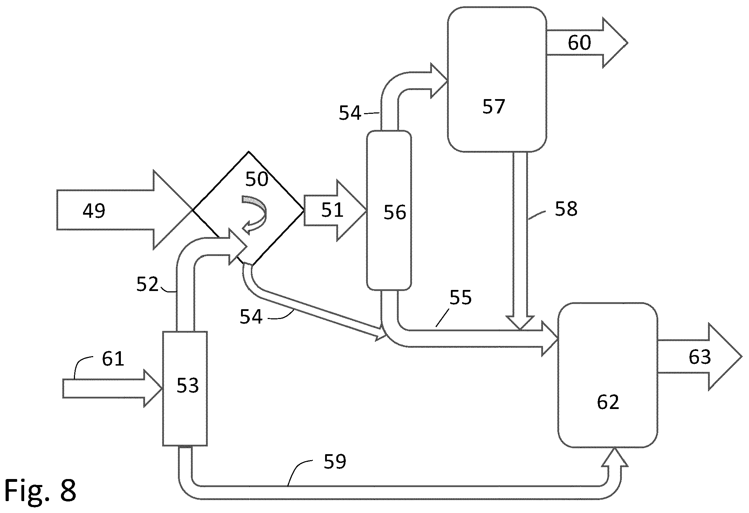

Figure 8 shows a process wherein a waste plastic feedstock mixture (49) comprising PE, PP, PS, PVS and PET is milled in a cryogenic milling operation (50) to a powder (51) of the waste plastic feedstock. In this operation liquid nitrogen (52) is contacted with the waste plastic feedstock (49). The liquid nitrogen (52) is obtained in an air separation process (53). A fraction of fines (54) is separated from the powder of the waste plastic feedstock (51) before the powder (51) is separated into a light fraction (54) having an average particle density of below 1100 kg/m3 and a heavy fraction (55) having an average particle density of above 1100 kg/m3 in fluidized bed (56). The fines fractions (54) is combined with the heavy fraction (55). The light fraction (54) is cracked to lower olefins (60), like ethylene, propylene and butylenes and a heavier C5 plus fraction (58) in a fluidized catalytic cracking process (FCC) (57). This heavier fraction (58) may be used as such, for example as a transportation fuel or a precursor thereof. This fraction (58) may also be recycled to the FCC reactor, for example as a slurry of the heavier fraction (58) and the light fraction of waste plastic powder (54) (not shown). In this figure the heavy fraction (58) is mixed with the heavier fraction of the waste plastic powder (55) to obtain a slurry. This slurry is partly combusted using an oxygen comprising gas (59) obtained in an air separation process (53 having air (61) as feed to a syngas in a pressurised entrained flow gasifier (62). In gasifier (62) a syngas (63) comprising hydrogen and carbon monoxide is obtained.

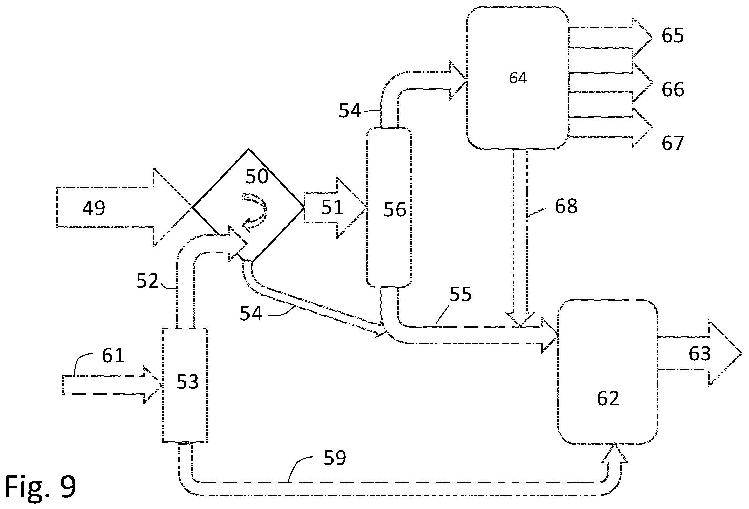

In Figure 9 a process as in Figure 8 is shown except that the light fraction (54) comprising PE/PP/PS is separated by means of more than one electrostatic separation steps (64) into relatively pure PE (65), PP (66) and PS (67) fractions as a refined polymer product. The residue (68) obtained in the electrostatic separation steps (64) may be added to the heavy fraction (55) as shown. Combinations of the process of figure 8 and 9 is also possible wherein the light fraction (54) is split and part is used as feed of the catalytic cracking process of figure 8 and part is separated into refined polymer products as shown in Figure 9.

Figure 10a-10c shows a possible fluidized bed apparatus which van be used for fluidised bed (56) of Figures 8 and 9. The apparatus is a box like apparatus (70) provided with an inlet (71) for a powder of the waste plastic feedstock. Figure 10a shows a three-dimensional simplified representation. Figure 10b shows a cross-section of apparatus (70) as seen from in a horizontal view in a backward direction. Figure 10c shows a cross-section of apparatus (70) as seen in a vertical direction from below. In Figure 10a it is seen that the box like apparatus is divided in 5 fluidly connected sections (72a-72e) separated by internal walls (73a-73d). First section (72a) is provided with the inlet (71) for the powder of the waste plastics as present in outer wall (74). This inlet may be at an intermediate elevation as shown in Figure 10b and at one end (75) of the section (72a) as seen in Figure 10c. To sections (72a-72e) a fluidising gas (76) is provided from below as distributed by header (76a) provided with a gas permeable distribution plate (77), for example made of sintered metal. At the top end of the sections (72a-72e) this fluidising gas is collected in a header (78) (not shown in Figure 10a) and discharged via conduit (79). In sections (72a-72e) a fluidised bed of powder of waste plastics will be present. The height of the fluidised beds will slightly decrease per downstream section such to enable a flow of powder from one section to the next section. The sections (72a-72e) are fluidly connected by means of openings (80a-80d) at the lower end of the internal walls (73a-73d). In the figures the sections are positioned next to each other such that a side wall of one section is also a side wall of the neighbouring section. These openings are positioned alternatingly at different ends of the sections as sown in Figure 10c such that the powder is required to travel horizontally in such a section. Every section (72a-72e) is further provided with an outlet (81) for the light fraction at or just below the upper end of the fluidised bed as present per section. These outlets (81a-81e) may be positioned at a lower elevation per section as shown in Figures 10a-10b such that they are below or at the bed height of the fluidised bed in said particular section. In figure 10c it is shown that these outlets (81a-81e) are positioned at the end of the section wherein also the heavier fraction is discharged via openings (80a-80d) to the next section or discharged as the heavier fraction from the apparatus via outlet (82). These openings may also be positioned at different locations in the sections. The fluidisation sections have two spaced apart end walls and two elongated side walls. An inlet for powder is present at one end and an outlet for a heavier fraction at the other end. At the upper end an outlet for a light fraction is present. At the lower end a section a fluidisation plate is present for passage of a fluidising medium. The sections are coupled wherein an outlet for a heavier fraction is fluidly connected to the inlet for a powder. The most upstream section will be provided with an inlet for a powder feed which may be located at any height and preferably in the middle section. The sections are preferably positioned next to each other such that a side wall of one section is also a side wall of the neighbouring section. At the upper end of a section an outlet for the fluidising medium will be present.

## Claims

1. Process to convert a waste polymer product to a gaseous product comprising the following steps:
(a) cryogenic milling of the waste polymer product to obtain polymer particles, wherein the waste polymer product is a mixture of different waste polymer products comprising at least two polymers of the following list of polymers consisting of LDPE (Low-density polyethylene), HDPE (High-density polyethylene); PP (Polypropylene); PS (Polystyrene); PVC (Polyvinyl chloride); PET (Polyethylene terephthalate); PUT (Polyurethanes) and PP&A fibres (Polyphthalamide fibres),
(b) partial combustion of the polymer particles by contacting the polymer particles with oxygen to obtain a syngas comprising carbon monoxide and hydrogen by performing step (b) in a rotary kiln reactor or a tubular reactor having axial mixing means and wherein the polymer particles are comprised in a reactive solid biomass matrix as a pellet or briquette obtained by mixing and compressing between 98 and 40 wt% of the reactive solid biomass matrix and between 2 and 60 wt% of the polymer particles, wherein the reactive solid biomass matrix comprises a carbonaceous compound and ash forming compounds and wherein the temperature in step (b) is between 500 and 800 °C and below the melting temperature of the ash forming compounds and at a solid residence time of between 1 and 60 minutes such to obtain char particles and a gaseous mixture of a syngas and gaseous hydrocarbons and wherein the char particles are separated from the gaseous mixture and wherein the gaseous mixture is subjected to a second partial combustion at a temperature of between 1000 and 1800 °C and above the ash melting temperature of the ash forming compounds to obtain a mixture enriched in syngas.

2. Process according to claim 1, wherein in step (a) liquid nitrogen is used and in step (b) an oxygen containing gas is used and wherein the liquid nitrogen and the oxygen containing gas is obtained in the same air separation process.

3. Process according to claim 2, wherein the air separation process is a cryogenic air distillation process.

4. Process according to claim 3, wherein the cryogenic air distillation process is integrated with a liquified natural gas (LNG) regas plant wherein one or more nitrogen rich gas streams of the air separation plant are reduced in temperature and/or liquified by indirect heat exchange with the evaporating liquid natural gas of the regas plant.

5. Process according to any one of claims 1-4, wherein the reactive solid biomass matrix is a powder and/or fibres of a biomass compound.

6. Process according to any one of claims 1-5, wherein the temperature in step (a) is below minus 180 (-180 °C).

7. Process according to any one of claims 1-6, wherein at least 90 wt% of the polymer particles obtained in step (a) will pass through a 12 mesh screen.

8. Process according to any one of claims 1-7, wherein the waste polymer product comprising polymers having a density of below 1100 kg/m³ and polymers having a density above 1100 kg/m³ and wherein in a step (a1) the polymer particles obtained in step (a) are separated into at least a light fraction having an average particle density of below 1100 kg/m³ and a heavy fraction having an average particle density of above 1100 kg/m³, and wherein in step (b) the heavy fraction and/or the light fraction is partly combusted and wherein the polymers having a density of below 1100 kg/m³ comprises at least one of the following list of polymers consisting of low-density polyethylene, high-density polyethylene, polypropylene and polystyrene and wherein the polymers having a density of above 1100 kg/m³ comprises at least one of the following list of polymers consisting of polyvinyl chloride, polyethylene terephthalate; polyurethanes and polyphthalamide fibres, polyvinylidene chloride, polyurethane, acrylonitrile-butadiene-styrene, nylon, aramid and fluorinated polymers.

9. Process according to any one of claims 2-8, wherein the content of hydrogen in the mixture of carbon monoxide and hydrogen is increased by performing one or more water gas shift reaction steps thereby converting carbon monoxide to carbon dioxide,
wherein the hydrogen and carbon dioxide are separated to obtain isolated hydrogen and isolated carbon dioxide, and
wherein the isolated hydrogen is reacted with nitrogen to obtain ammonia and
wherein the nitrogen used to react with hydrogen is obtained in the air separation unit.

10. Process according to any claim 9, wherein the ammonia is reacted with the isolated carbon dioxide to urea.

## Patentansprüche

1. Verfahren zum Umwandeln eines Polymerabfallprodukts in ein gasförmiges Produkt, umfassend die folgenden Schritte:
(a) kryogenes Mahlen des Polymerabfallprodukts, um Polymerpartikel zu erhalten, wobei das Polymerabfallprodukt eine Mischung aus unterschiedlichen Polymerabfallprodukten ist, umfassend mindestens zwei Polymere aus der folgenden Liste von Polymeren, bestehend aus LDPE (Polyethylen niedriger Dichte), HDPE (Polyethylen hoher Dichte); PP (Polypropylen); PS (Polystyrol); PVC (Polyvinylchlorid); PET (Polyethylenterephthalat); PUT (Polyurethane) und PP&A-Fasern (Polyphthalamidfasern),
(b) partielle Verbrennung der Polymerpartikel durch Kontaktieren der Polymerpartikel mit Sauerstoff, um ein Synthesegas zu erhalten, umfassend Kohlenmonoxid und Wasserstoff, durch Durchführen von Schritt (b) in einem Drehrohrofenreaktor oder einem Rohrreaktor, der axiale Mischeinrichtungen aufweist, und wobei die Polymerpartikel in einer reaktiven festen Biomassematrix als ein Pellet oder ein Brikett enthalten sind, das durch Mischen und Komprimieren zwischen 98 bis 40 Gew.-% der reaktiven festen Biomassematrix und zwischen 2 bis 60 Gew.-% der Polymerpartikel erhalten wird, wobei die reaktive feste Biomassematrix eine kohlenstoffhaltige Verbindung und ascheausbildende Verbindungen umfasst, und wobei die Temperatur in Schritt (b) zwischen 500 und 800 °C und unterhalb der Schmelztemperatur der ascheausbildenden Verbindungen liegt, und bei einer Feststoffverweilzeit zwischen 1 und 60 Minuten, so dass Holzkohlepartikel und eine gasförmige Mischung aus Synthesegas und gasförmigen Kohlenwasserstoffen erhalten werden, und wobei die Holzkohlepartikel von der gasförmigen Mischung getrennt werden, und wobei die gasförmige Mischung einer zweiten partiellen Verbrennung bei einer Temperatur zwischen 1000 und 1800 °C unterzogen wird und über der Ascheschmelztemperatur der ascheausbildenden Verbindungen, um eine mit Synthesegas angereicherte Mischung zu erhalten.

2. Verfahren nach Anspruch 1, wobei in Schritt (a) flüssiger Stickstoff verwendet wird und in Schritt (b) ein sauerstoffhaltiges Gas verwendet wird und wobei der flüssige Stickstoff und das sauerstoffhaltige Gas in dem selben Luftzerlegungsverfahren erhalten werden.

3. Verfahren nach Anspruch 2, wobei das Luftzerlegungsverfahren ein kryogenes Luftdestillationsverfahren ist.

4. Verfahren nach Anspruch 3, wobei das kryogene Luftdestillationsverfahren in eine Regasifizierungsanlage für verflüssigtes Erdgas (LNG) integriert ist, in der eine Temperatur eines oder mehrerer stickstoffreicher Gasströme der Luftzerlegungsanlage gesenkt und/oder durch indirekten Wärmeaustausch mit dem verdampfenden flüssigen Erdgas der Regasifizierungsanlage verflüssigt werden.

5. Verfahren nach einem der Ansprüche 1 bis 4, wobei die reaktive feste Biomassematrix ein Pulver und/oder Fasern einer Biomasseverbindung ist.

6. Verfahren nach einem der Ansprüche 1 bis 5, wobei die Temperatur in Schritt (a) unter minus 180 (-180 °C) liegt.

7. Verfahren nach einem der Ansprüche 1 bis 6, wobei mindestens 90 Gew.-% der Polymerpartikel, die in Schritt (a) erhalten werden, durch ein Maschensieb mit Weite 12 hindurch verlaufen.

8. Verfahren nach einem der Ansprüche 1 bis 7, das Polymerabfallprodukt umfassend Polymere, die eine Dichte von unter 1100 kg/m³ aufweisen, und Polymere, die eine Dichte über 1100 kg/m³ aufweisen, und wobei in einem Schritt (a1) die Polymerpartikel, die in Schritt (a) erhalten werden, in mindestens eine Leichtfraktion, die eine mittlere Partikeldichte von unter 1100 kg/m³ aufweist, und eine Schwerfraktion getrennt werden, die eine mittlere Partikeldichte von über 1100 kg/m³ aufweist, und wobei in Schritt (b) die Schwerfraktion und/oder die Leichtfraktion teilweise verbrannt werden und wobei die Polymere, die eine Dichte von unter 1100 kg/m³ aufweisen, mindestens eines der folgenden Liste von Polymeren umfasst, bestehend aus Polyethylen niedriger Dichte, Polyethylen hoher Dichte, Polypropylen und Polystyrol, und wobei die Polymere, die eine Dichte von über 1100 kg/m³ aufweisen, mindestens eines der folgenden Liste von Polymeren umfasst, bestehend aus Polyvinylchlorid, Polyethylenterephthalat; Polyurethane und Polyphthalamidfasern, Polyvinylidenchlorid, Polyurethan, Acrylnitril-Butadien-Styrol, Nylon, Aramid und fluorierten Polymeren.

9. Verfahren nach einem der Ansprüche 2 bis 8, wobei der Wasserstoffgehalt in der Mischung aus Kohlenmonoxid und Wasserstoff durch das Durchführen eines oder mehrerer Kohlenmonoxidkonversionsschritte erhöht wird, wobei dadurch Kohlenmonoxid in Kohlendioxid umgewandelt wird,
wobei der Wasserstoff und das Kohlendioxid getrennt werden, um isolierten Wasserstoff und isoliertes Kohlendioxid zu erhalten, und
wobei der isolierte Wasserstoff mit Stickstoff reagiert wird, um Ammoniak zu erhalten, und wobei der Stickstoff, der verwendet wird, um mit Wasserstoff zu reagieren, in der Luftzerlegungseinheit erhalten wird.

10. Verfahren nach Anspruch 9, wobei das Ammoniak mit dem isolierten Kohlendioxid zu Harnstoff reagiert wird.

## Revendications

1. Procédé de conversion d'un produit de polymère de déchet en un produit gazeux comprenant les étapes suivantes :
(a) le broyage cryogénique du produit de polymère de déchet pour obtenir des particules de polymère, dans lequel le produit de polymère de déchet est un mélange de différents produits de polymères de déchets comprenant au moins deux polymères de la liste suivante de polymères constituée de PELB (polyéthylène basse densité), PEHD (polyéthylène haute densité) ; PP (polypropylène) ; PS (Polystyrène) ; PVC (polychlorure de vinyle) ; PET (polytéréphtalate d'éthylène) ; PUT (polyuréthanes) et fibres PPA (fibres de polyphtalamide),
(b) la combustion partielle des particules de polymère par mise en contact des particules de polymère avec de l'oxygène pour obtenir un gaz de synthèse comprenant du monoxyde de carbone et de l'hydrogène en effectuant l'étape (b) dans un réacteur à four rotatif ou un réacteur tubulaire doté de moyens de mélange axial et dans lequel les particules de polymère sont comprises dans une matrice de biomasse solide réactive sous la forme d'une pastille ou d'une briquette obtenue en mélangeant et en comprimant entre 98 et 40 % en poids de la matrice de biomasse solide réactive et entre 2 et 60 % en poids des particules de polymère, dans lequel la matrice de biomasse solide réactive comprend un composé carboné et des composés formant des cendres et dans lequel la température à l'étape (b) est comprise entre 500 et 800 °C et inférieure à la température de fusion des composés formant des cendres et à un temps de séjour solide compris entre 1 et 60 minutes de manière à obtenir des particules de charbon et un mélange gazeux d'un gaz de synthèse et d'un gaz de synthèse, et dans lequel la matrice de biomasse solide réactive comprend un composé carboné et des composés formant des cendres dans lequel les particules de charbon sont séparées du mélange gazeux et dans lequel le mélange gazeux est soumis à une seconde combustion partielle à une température comprise entre 1 000 et 1 800 °C et supérieure à la température de fusion des cendres des composés formant des cendres afin d'obtenir un mélange enrichi en gaz de synthèse.

2. Procédé selon la revendication 1, dans lequel l'étape (a) utilise de l'azote liquide et l'étape (b) un gaz contenant de l'oxygène et dans lequel l'azote liquide et le gaz contenant de l'oxygène sont obtenus par le même procédé de séparation d'air.

3. Procédé selon la revendication 2, dans lequel le procédé de séparation d'air est un procédé de distillation cryogénique d'air.

4. Procédé selon la revendication 3, dans lequel le processus de distillation cryogénique de l'air est intégré à une usine de regazéification de gaz naturel liquéfié (GNL), dans lequel un ou plusieurs flux gazeux riches en azote de l'usine de séparation de l'air sont réduits en température et/ou liquéfiés par échange de chaleur indirect avec le gaz naturel liquide évaporé de l'usine de regazéification.

5. Procédé selon l'une quelconque des revendications 1 à 4, dans lequel la matrice de biomasse solide réactive est une poudre et/ou des fibres d'un composé de biomasse.

6. Procédé selon l'une quelconque des revendications 1 à 5, dans lequel la température à l'étape (a) est inférieure à moins 180 (-180 °C).

7. Procédé selon l'une quelconque des revendications 1 à 6, dans lequel au moins 90 % en poids des particules de polymère obtenues à l'étape (a) passent à travers un tamis de 12 mailles.

8. Procédé selon l'une quelconque des revendications 1 à 7, dans lequel le produit de polymère de déchet comprend des polymères ayant une densité inférieure à 1100 kg/m³ et des polymères ayant une densité supérieure à 1100 kg/m³ et dans lequel, à l'étape (a1), les particules de polymère obtenues à l'étape (a) sont séparées en au moins une fraction légère ayant une densité moyenne de particules inférieure à 1100 kg/m³ et une fraction lourde ayant une densité moyenne de particules supérieure à 1100 kg/m³, et dans lequel, à l'étape (b), la fraction lourde et/ou la fraction légère sont partiellement brûlées et dans lequel les polymères ayant une densité inférieure à 1 100 kg/m³ comprennent au moins un des polymères de la liste suivante, à savoir le polyéthylène basse densité, le polyéthylène haute densité, le polypropylène et le polystyrène, et dans lequel les polymères ayant une densité supérieure à 1 100 kg/m³ comprennent au moins un des polymères de la liste suivante, à savoir le polychlorure de vinyle et le polyéthylène téréphtalate ; les fibres de polyuréthane et de polyphtalamide, le chlorure de polyvinylidène, le polyuréthane, l'acrylonitrile-butadiène-styrène, le nylon, l'aramide et les polymères fluorés.

9. Procédé selon l'une quelconque des revendications 2 à 8, dans lequel la teneur en hydrogène du mélange de monoxyde de carbone et d'hydrogène est augmentée par le fait d'effectuer une ou de plusieurs étapes de réaction de déplacement de l'eau vers le gaz, convertissant ainsi le monoxyde de carbone en dioxyde de carbone,
dans lequel l'hydrogène et le dioxyde de carbone sont séparés pour obtenir de l'hydrogène isolé et du dioxyde de carbone isolé, et
dans lequel l'hydrogène isolé réagit avec l'azote pour obtenir de l'ammoniac et l'azote utilisé pour réagir avec l'hydrogène est obtenu dans l'unité de séparation de l'air.

10. Procédé selon la revendication 9, dans lequel l'ammoniac réagit avec le dioxyde de carbone isolé pour donner de l'urée.
